# EUROPEAN PATENT SPECIFICATION

(11) **EP 2 483 474 B1**
(45) Date of publication and mention of the grant of the patent: **03.07.2013**
(21) Application number: 10765819.7
(22) Date of filing: 01.09.2010
(51) Int. Cl.: D21G 1/00

(54) **HYDRAULIC ACTUATOR, METHOD AND APPARATUS FOR DAMPENING VIBRATION OF A MACHINE ELEMENT**
HYDRAULIKZYLINDER, VERFAHREN UND VORRICHTUNG ZUM DÄMPFEN EINES MASCHINENELEMENTS
ACTIONNEUR HYDRAULIQUE, PROCÉDÉ ET APPAREIL POUR AMORTIR LA VIBRATION D'UN ÉLÉMENT DE MACHINE

(30) Priority: 30.09.2009 FI 20095998
(43) Date of publication of application: 08.08.2012
(73) Proprietor: Metso Paper, Inc., 00130 Helsinki (FI)
(72) Inventor: MANNIO, Aaron, 04430 Järvenpää (FI); HAKOLA, Jani, 04460 Nummenkylä (FI); VILJANMAA, Mika, 00760 Helsinki (FI)
(74) Representative: Lamberg, Samu Petteri
(86) International application number: PCT/FI2010/050678
(87) International publication number: WO 2011/039411

(56) References cited:
- DE-A1- 3 702 245

## Description

### TECHNICAL FIELD

The invention relates to a hydraulic actuator. The invention relates also to a method and an apparatus for dampening vibration of a machine element. The invention relates particularly, though not exclusively, to dampening of nip vibration of a calender.

### BACKGROUND ART

In a fiber web machine there are several places with roll nips or web modifying regions. One such apparatus is, for example, a multiroll calender, which comprises rolls that are arranged in a roll stack. Adjacent rolls are in a mutual nip contact and the fiber web to be calendered, such as a paper or board web or a comparable, is arranged to travel through the nips between the rolls. In a roll stack the rolls can typically move relative to the calender frame.

The fiber web machine may be a paper, a board or a tissue machine.

In the calender and in the calender rolls and the support structures of the rolls, such as supporting and loading arms and supporting and relief cylinders, vibrations arise due to the force variations present in the calender nip. In the nip force variations appear that may result from an object that is thicker than usual or from a folded web traveling through the nip. The force variations create in some cases continuous vibration that causes stress of machine elements and deterioration in the quality of the fiber web and web breaks.

In a utility model application FI U20020278, a relief cylinder is presented for controlling a roll of a multinip calender, which cylinder comprises a quick-opening chamber that is placed within the arm of the cylinder.

In a patent application FI 20040135, there is presented a relief cylinder which comprises a quick-opening chamber placed within the arm of the relief cylinder, the emptying of which quick-opening chamber is arranged to pass through a piston and a quick-opening piston of the relief cylinder.

DE 102008045850 A1 shows hydraulic cylinders supporting a soft roll of a calender.

### SUMMARY

According to a first aspect of the invention there is provided a hydraulic actuator comprising a cylinder part and a piston part adapted to be moved within the cylinder part, the piston part comprising a piston and an arm attached to the piston, and the hydraulic actuator comprising at a first side of the piston a first pressure volume to be pressurized with hydraulic pressure medium for a first motion direction and at a second side of the piston a second pressure volume to be pressurized with hydraulic pressure medium for a second motion direction. In the hydraulic actuator, a compressible pressure volume is arranged to pressure connection with at least one said pressure volume.

The hydraulic actuator is a hydraulic cylinder.

The rigidity of the hydraulic actuator may be changed by adjusting the pressure of the compressible pressure volume.

Preferably, compressible pressure medium is arranged within the compressible pressure volume.

Preferably, when pressure in each pressure volume exceeds pressure arranged to the compressible pressure volume in pressure connection with that pressure volume, this compressible pressure volume contracts. The pressures may be adjusted individually for each pressure volume.

A first compressible pressure volume may be arranged to a first pressure connection with the first pressure volume. A second compressible pressure volume may be arranged to a second pressure connection with the second pressure volume.

The compressible pressure medium advantageously arranged within the compressible pressure volume may comprise medium having a compressibility higher than the compressibility of the hydraulic pressure medium used in the chambers. The compressible pressure medium may comprise a gas mixture such as nitrogen or a nitrogen mixture.

At least one compressible pressure volume may be arranged to the piston part. The compressible pressure volume is arranged to the piston and/or to the arm.

The first compressible pressure volume may be arranged to the first pressure volume. The second compressible pressure volume may be arranged to the second pressure volume.

The first compressible pressure volume and the second compressible pressure volume may be arranged to the piston part.

Between the compressible pressure volume and the pressure volume in pressure connection with it there may be fitted a movable separation structure, such as a membrane or a piston, which borders with the compressible pressure volume, which movable separation structure advantageously comprises a limited motion length in the direction of the pressure volume.

A support sheet may be fitted between the movable separation structure and the respective compressible pressure volume, the support sheet comprising pressure channels such as holes.

A mesh may be fitted between the movable separation structure and the support sheet.

According to a second aspect of the invention there is provided an apparatus comprising a machine element and a hydraulic actuator supporting the machine element, the hydraulic actuator comprising a cylinder part and a piston part adapted to be moved within the cylinder part, the piston part comprising a piston and an arm attached to the piston, and the cylinder comprising at a first side of the piston a first pressure volume to be pressurized with hydraulic pressure medium for a first motion direction and at a second side of the piston a second pressure volume to be pressurized with hydraulic pressure medium for a second motion direction. In the hydraulic actuator, a compressible pressure volume is arranged to pressure connection with at least one said pressure volume for dampening vibration of the machine element.

The apparatus may comprise a nip apparatus of a fiber web machine such as a calender comprising a roll supported by the hydraulic actuator.

According to a third aspect of the invention there is provided a method for dampening vibration of a machine element of a fiber web machine, the method comprising supporting the machine element with a hydraulic actuator comprising a cylinder part and a piston part adapted to be moved within the cylinder part, the piston part comprising a piston and an arm attached to the piston, and the cylinder comprising at a first side of the piston a first pressure volume to be pressurized with hydraulic pressure medium for a first motion direction and at a second side of the piston a second pressure volume to be pressurized with hydraulic pressure medium for a second motion direction. The method comprises arranging in the hydraulic actuator a compressible pressure volume to pressure connection with at least one said pressure volume.

Advantages of the invention are described in the appended description.

Different embodiments of the present invention will be illustrated or have been illustrated only in connection with some aspects of the invention. A skilled person appreciates that any embodiment of some aspect of the invention may apply to the same aspect of the invention and other aspects alone or in combination with other embodiments as well.

### BRIEF DESCRIPTION OF THE DRAWINGS

The invention will now be described, by way of example, with reference to the accompanying schematical drawings, in which:
Fig. 1 shows a side view of a calender having two rolls bearing-mounted on support and loading arms loadable with hydraulic actuators;
Fig. 2 shows a side section view of a first hydraulic cylinder;
Fig. 3 shows a side section view of a second hydraulic cylinder;
Fig. 4 shows an embodiment of a Fig. 2 type cylinder;
Fig. 5 shows another embodiment of a Fig. 2 type cylinder; and
Fig. 6 shows a sealing structure of a piston of a cylinder.

### DETAILED DESCRIPTION

In the following description, like numbers denote like elements. It should be appreciated that the illustrated drawings are not entirely in scale, and that the drawings mainly serve the purpose of illustrating embodiments of the invention.

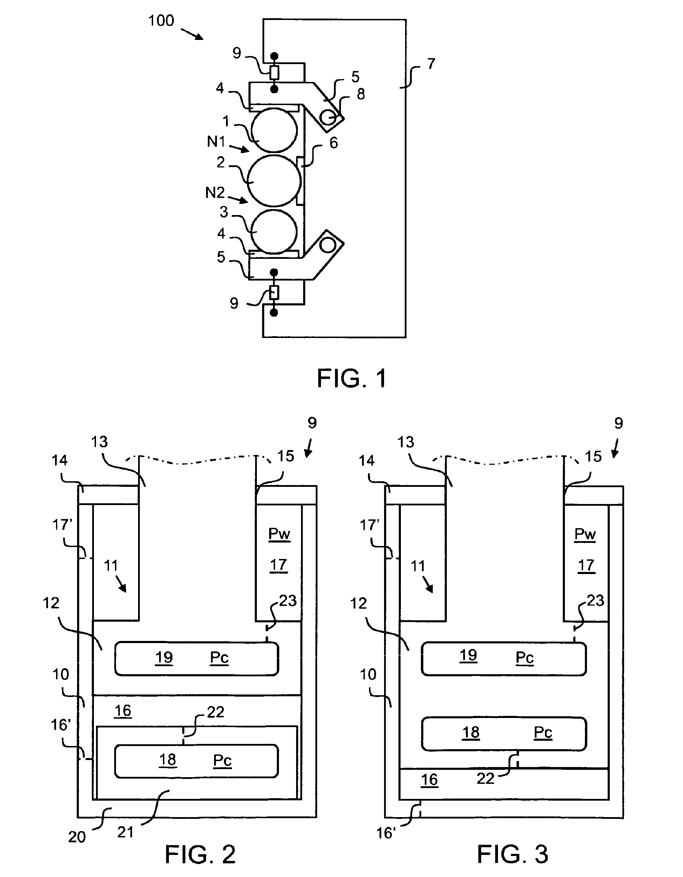

Fig. 1 shows a side view of a calender 100 comprising an upper roll 1 as a first calender roll, a second calender roll 2 and a bottom roll 3 as a third calender roll. The upper roll 1 and the bottom roll 3 are rotatably bearing-mounted at both ends of the rolls with bearing houses 4 that are attached to support and loading arms 5. The second calender roll 2 between the upper roll 1 and the bottom roll 3 is rotatably bearing-mounted at both ends of the roll with bearing houses 6 that are attached fixed to the frame 7 of the calender 100. The upper roll 1 and the bottom roll 3 can be loaded against the second calender roll 2 with hydraulically operated cylinders 9 fitted between the frame 7 and the support and loading arms 5.

The upper roll 1 and the second calender roll 2 form between themselves a first nip N1 for calendering the fiber web W. The bottom roll 3 and the second calender roll 2 form between themselves a second nip N2 for calendering the fiber web W. The first nip N1 and the second nip N2 may be used individually or together. Thus, according to a first running fashion, the first nip N1 may be closed and the second nip N2 may be open. According to a second running fashion, both the first nip N1 and the second nip N2 may be closed. According to a third running fashion, the first nip N1 may be open and the second nip N2 may be closed. A running path of the fiber web W may be realized through both nips or through one nip. The fiber web may be calendered in one nip when simultaneously the running path travels through an open nip. In the Figure, for the sake of clarity, the fiber web W and fly rolls and guide rolls, typical for a calender, are not shown.

The calender present in some embodiments of the invention may be, for instance, a soft calender or a multiroll calender, comprising, for example, two soft nips in which the fiber web may be calendered in a nip between a soft coating and a hard coating. Thus, according to some advantageous embodiments, in the roll stack of three rolls of the calender 100, the central second calender roll 2 is a thermo roll with a hard surface and the upper roll 1 and the bottom roll 3 are deflection compensated rolls with soft surfaces. It should be emphasized, however, that the number of calender rolls, the quality of coatings, the positioning and number of or support fashion with regard to the frame of the calender of heatable rolls and of deflection compensated rolls are not intended to be limiting to the invention.

Fig. 2 shows a first hydraulic cylinder 9 with which a nip N1, N2 of the calender 100 may be loaded. The cylinder 9 comprises a cylinder part 10 and a piston part 11 adapted to be moved within the cylinder part, the piston part 11 comprising a piston 12 and an arm 13 attached to the piston. In the Figure, attaching parts in the cylinder part 9 and in the arm 13 that allow the attachment of the cylinder 9 to an outside apparatus, are not shown. The cylinder 9 comprises a cover 14 attached to the cylinder part 10 and comprising an opening 15 for the arm 13 of the piston part 11. The opening 15 comprises a pressure sealing that allows a working motion of the arm 13. The cover 14 closes the piston 12 and a portion of the arm 13 within the cylinder part 10.

The cylinder 9 is preferably formed to operate in two directions. The cylinder part 10 comprises a first chamber 16 for hydraulic medium as a first pressure volume incurring a first motion direction, and a second chamber 16 for hydraulic medium as a second pressure volume incurring a second motion direction. In Fig. 2, the first motion direction is illustrated as a motion direction expanding the cylinder 9 and the second motion direction is illustrated as a motion direction contracting the cylinder 9.

In Fig. 2, an inner surface of the cylinder part 10 and a surface of the piston 12 at an armless side of the piston part 11 define between themselves the first chamber 16. An inner surface of the cylinder part 10, a surface of the piston 12 and the arm 13, and a surface of the cover 14 define between themselves the second chamber 17. A first chamber channel 16' and a second chamber channel 17' are arranged in the cylinder part 10 through which channels the first chamber 16 and the second chamber 17 are coupled to a hydraulic system (not shown in the Figures). The first chamber channel 16' and the second chamber channel 17' comprise for hydraulic fluid a flow-through opening that is advantageously formed in a wall of the cylinder part 10.

In the cylinder 9 a first compressible pressure volume 18 is arranged in connection with the first chamber 16 and second compressible pressure volume 19 is arranged in connection with the second chamber 17. The first compressible pressure volume 18 is arranged in a pressure volume piece 21, which is arranged in the first chamber 16 and attached advantageously to a bottom 20 of the cylinder part 10. The first pressure volume 18 may also be arranged to the bottom 20 of the cylinder part 10. The first pressure volume 18 may be arranged to a region of the first chamber 16. According to some embodiments the first pressure volume 18 may be arranged to pressure connection with the first chamber 16 outside the cylinder part 10, near the wall or the bottom 20 of the cylinder part.

In Fig. 2, the compressible second pressure volume 19 is adapted to be moved with the piston part 11 inside the piston 12. The second pressure volume 19 may also be arranged within the arm 13. In some embodiments, the second pressure volume 19 may be arranged to the cover 14 or in a separate pressure volume piece fitted to the second chamber 17, and the pressure volume piece may be attached to the cover 14. The second pressure volume 19 may be arranged to a region of the second chamber 17. According to some embodiments, the second pressure volume 19 may be arranged to a pressure connection with the second chamber 17 outside the cylinder part 10, near the wall or the cover 14 of the cylinder part 10.

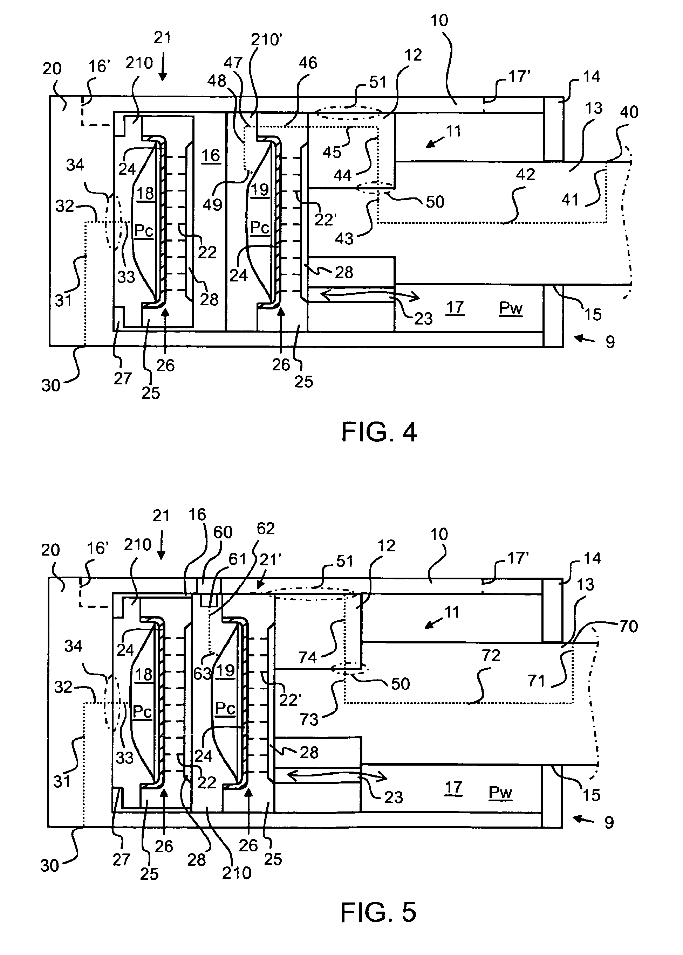

Preferably, the compressible pressure volume 18, 19 is separated by a formable material, such as a partition wall, for example, a flexible membrane 24 or bellow (Figs. 4 and 5), from the hydraulic fluid in the chamber 16, 17 of the cylinder 9. The liquid pressure medium in the chamber 16, 17 of the cylinder 9 is via a channel structure 22, 23 in a pressure and flow connection with a formable material, which defines the compressible pressure volume 18, 19. The total area of the channel structure shall be as large as possible, that the pressure waves influence the compressible pressure volume as well as possible. The first pressure channel 22 forms a pressure connection between the first compressible pressure volume 18 and the chamber 16 via a face of the pressure volume piece 21. The second pressure channel 23 forms a pressure connection between the second compressible pressure volume 19 and the chamber 17 via an upper surface of the piston 12. Preferably, there are arranged several large diameter second pressure channels 23 in the piston 12 in the region surrounding the arm 13. Expanding of the cylinder 9 caused by an external force may result in a momentary decrease of pressure in the first chamber 16 and a momentary increase of pressure in the second chamber 17. A contraction of the cylinder 9 caused by an external force may result in a momentary increase of pressure in the first chamber 16 and a momentary decrease of pressure in the second chamber 17.

Vibration is induced by variation of forces in the nip N1, N2 to the calender 100 to the rolls 1, 2, 3 and to the support structures of the rolls, such as the supporting and loading arms 5 and in the cylinders 9. The stress of machine elements caused by single force variations and the continuous vibration caused by single vibrations and the deterioration of quality caused to the fiber web may be reduced by limiting with help of the cylinder 9 force peaks that are transmitted by the hydraulic fluid. Stress and vibration of machine elements in the calender 100 may be reduced by allowing the hydraulic fluid in the chambers 16, 17 of the cylinder 9 to compress the pressure volumes 18, 19. When the compressible pressure volumes 18, 19 are located in connection with the cylinder 9, preferably within the cylinder, the flow channels for the hydraulic fluid that transmit forces and pressure, that is, vibration energy may be selected sufficient short and such that they have a suitable diameter taking into account a flow resistance and because of a speed required by the limiting of the force peaks. Pressure accumulators located outside the cylinder in a feeding channel of the pressure medium do not have time to react to quick pressure variations.

When the pressure Pc prevailing in the compressible pressure volume 18, 19 is dimensioned equal to the loading pressure Pw prevailing in the chambers 16, 17 of the cylinder 9, the operation of the chambers 16, 17 can be ensured in the first direction and in the second direction. At the same time, however, pressure peak values that exceed the work pressure Pw in the chambers 16, 17 can be cut in a settable way since depending on the motion direction of the cylinder 9 the pressure volume 18 or 19 compresses defined by the way of the exceeding of a set value of the pressure Pc. Peak values of forces influencing the cylinder 9, such as peak amplitudes may thus be prevented from being transmitted forward at least in full via the cylinder from the nip N1, N2, for example. Among other things, an object that is thicker than usual or a fiber web bundle traveling through the nip N1 or N2 of the fiber web machine 100 may cause an outside force targeting the cylinder 9, the force comprising a momentary force peak which disturbs normal use.

The pressure volumes 18 and 19 are pressurized in a desired pressure Pc, which may be higher than the work pressure Pw. The cylinder 9 may be measured for a continuous work pressure that is maximal receivable from the hydraulic system, for example, Pw = 160 bar such that the cylinder 9 withstands also a loading that is momentary higher than this value. According to one embodiment, the pressure volumes 18 and 19 are pressurized to a pressure Pc that is equal with the load pressure wherein the pressure values exceeding the pressure, for example 160 bar, are cut off.

The cylinder 9 may be dimensioned to a pressure range from 0 to 200 bar. The pressure may be 250 bar in a pressure test of cylinder parts under pressure.

According to some very advantageous embodiments, the pressure in the chambers 16, 17 and in the pressure volumes 18, 19 during use of the cylinder 9 (i.a. during the hydraulic supporting of the machine element 1, 2, 3 when running the fiber web machine 100) is such that the membrane 24 is positioned in the middle region of the compressible pressure volume so that the membrane 24 has an equal clearance in both directions. Then, the membrane 24 is able to vibrate freely in both directions and does not transmit the pressure waves arising from the vibrations of the rolls 1, 2, 3, to the frame 7 of the machine 100.

Resonance vibrations appearing in the machine 100 may be avoided or at least reduced by changing the rigidity of the hydraulic support of the machine elements. When the compressible pressure volumes 18, 19 are pressurized in equal pressure with the chambers 16, 17 acting as work volume of the cylinder 9, and the membranes 24 set in a middle space defined by the extremes of the motion of the membranes, the rigidity of the cylinder 9 drops and a characteristic vibration frequency of the resonance decreases.

Filling of the compressible pressure volumes 18, 19 of the cylinder 9 separated by the membrane may be performed during use so that the volume 18, 19 is first filled to a pressure slightly below the work pressure Pw. Thereafter, a known amount of gas may be pressed additionally in the volume 18, 19 so that the membrane 24 is positioned in the middle region, preferably, in an exact middle position in the middle of its motion range. The additional filling may be performed, for instance, with an auxiliary cylinder.

According to some embodiments, a desired pressure value Pc may be set in the compressible pressure volume 18, 19 then when the cylinder is in its compressed state, in other words, in its minimum length (e.g., Fig. 5). According to some embodiments, the pressure value Pc of the compressible pressure volume 18, 19 may be adjusted during the use of the cylinder (e.g., Fig. 4).

According to some embodiments, the pressures of both compressible pressure volumes 18, 19 may be adjusted separately. Preferably, the compressible pressure volumes 18, 19 are pressurized with a gas mixture. The gas mixture may comprise pressurized nitrogen. Nitrogen and nitrogen mixtures are available, for instance, in gas tanks of 200 to 300 bar, the pressure of which may be adjusted to a pressure Pc with a pressure limiter. More generally, a medium may be used as pressure medium in the compressible pressure volume 18, 19, the compressibility of which medium is greater than the compressibility of the hydraulic fluid (hydraulic oil), preferably fluid, in other words, flowing medium.

A cylinder 9 that works according to the principle described in advance may be arranged to a structure in use, such as the calender 100 or another nip apparatus, in exchange for the existing cylinders.

Fig. 3 shows a second hydraulic cylinder 9 that differs from Fig. 2 such that the first compressible pressure volume 18 is adapted to be moved with the piston part 11, preferably arranged within the piston 12 instead of the chamber 16. The description referring of Fig. 2 can be used for understanding also Fig. 3. A pressure connection forming a first pressure channel 22 runs from the first compressible pressure volume 18 to the first chamber 16 via the face surface of the piston 12. A first chamber channel 16' is arranged in the bottom 20 of the cylinder part 10

Fig. 4 shows more particularly one embodiment of the hydraulic cylinder 9 shown in Fig. 2. Some advantageous ways for leading pressures between the outside of the cylinder 9 and the compressible pressure volumes 18, 19 are shown in Fig. 4. Additionally, some advantageous ways for separating the compressible pressure medium of the compressible pressure volumes 18, 19 from the hydraulic fluid in the hydraulic fluid volume of the chambers 16, 17 are shown in Fig. 4.

The structures of both compressible pressure volumes 18, 19 are principally similar. A movable separating structure, such as the membrane 24 shown in Fig. 4, is fitted between the compressible pressure volume 18, 19 and the chamber 16, 17 of the cylinder, which is in pressure connection with the compressible pressure volume, which separating structure is confined to said compressible pressure volume. The movable separating structure may also be a piston (not shown). The motion length of the movable separating structure 24 is limited in a direction, where the pressure of the chamber 16, 17 of the corresponding cylinder influences the compressible pressure volume. The movable separating structure 24 is preferably used in order to prevent mixing of compressible pressure medium and hydraulic pressure medium. The limited motion length is preferably realized with a support plate 25 that comprises pressure channels such as holes 22, 22'. The pressure of gas Pc in the compressible pressure volume 18, 19 and the pressure of gas Pw in the chamber 16, 17 is preferably selected so that the membrane 24 positions, when in use, in a free space between the support plate 25 and a rear wall of the pressure volume 18,19. The membrane 24 may be produced of a rubber mixture, for instance.

The vibrations of the hydraulic fluid are dampened with help of the membrane 24 and the compressible pressure medium, such as a yielding gas. The size of the holes 22, 22' of the support plate 25 and the number of the holes of the support plate, in other words, the total area of the holes shall be as great as possible so that the pressure waves reach the membrane 24 as well as possible.

A mesh 26 may be placed between the support plate 25 and the membrane 24, at least at the holes 22, 22', to prevent penetrating of the membrane 24 into the holes 22, 22' of the support plate 25. The mesh 26 may be mesh (not shown) made from a yam or a corresponding lengthy material. A diameter of the yam may be about 0.25 mm. The mesh may be formed of the yarn by welding. The mesh may comprise yarns running in a first direction and yarns running in a second direction so that the first and second directions are, preferably, perpendicular with respect to another. The spaces of the yarns of the mesh to another may be in at least one direction about 0.6 mm. The mesh may be made of stainless steel. The mesh may also formed of plate, in which holes are manufactured.

The compressible pressure volume 18; 19, the membrane 24, the mesh 26 and the support plate 25 are preferably arranged in a pressure volume part 21, 21'.

A first pressure volume part 21 comprises a first bottom part 210, in which a pressure medium volume is formed. The bottom part 210 and the membrane 24 define between themselves the first compressible pressure volume 18. The membrane 24 and the mesh 26 are fitted to each other between the bottom part 210 and the support plate 25 which are adapted to be attached to each other. The first pressure volume part 21 may comprise an indentation 27 on a face of the bottom part 210 on the side of the bottom 20 in order to form a flowing passage for the hydraulic fluid between the first chamber channel 16' and the chamber 16. Also screws may be fitted to the indentation 27 in order to attach the bottom part 210 to the support plate 25. Preferably, in the support plate 25, outside the holes 22, a flow shape 28 may be formed from which there is also a flow connection to the chamber 16 surrounding the first pressure volume part 21 when the piston part 11 is entirely in its compressed position in the cylinder part 10.

A second pressure volume part 21' comprises a second bottom part 210', in which a pressure medium volume is formed. The bottom part 210' and the membrane 24 define between themselves the second compressible pressure volume 19. The membrane 24 and the mesh 26 are fitted between the bottom part 210' and the support plate 25 which are adapted to be attached to each other. The second pressure volume part 21' is, in Fig. 4, attached as a part of the piston 12. The bottom part 210' and the support plate 25 may be attached to another and as a part of the piston 12, for instance, with common fastening screws. Preferably, in the support plate 25, outside the holes 22', the flow shape 28 is formed, from which there is a flow connection to the second pressure channel 23 running to the second chamber 17.

First pressure channels 30-33 are arranged for conducting compressible pressure medium from outside the cylinder 9 to the first compressible pressure volume 18 and for creating pressure in the first compressible pressure volume 18. In Fig. 4, pressure Pc is formed with the first pressure channels 30-33 from a side of the cylinder part 11 via the bottom 20 to the pressure volume part 21, which is attached to the bottom 20, and further to the first compressible pressure volume 18 arranged to the pressure volume part 21.

A pressure coupling for a pressure pipe (not shown) may be arranged outside the cylinder part in a starting point of the first part 31 of the pressure channel 30-33. The first part 31 may be formed by a drilling having a direction of a radius of the bottom 20, which drilling joins to a second part 32 that is preferably parallel with a central axis of the cylinder, which second part may be a drilling on the central axis, and which opens inside the cylinder. A third part 33 of the pressure channel is formed by a drilling which runs from outside the pressure volume part 21 to the first pressure volume 18, which drilling joins to the second part 32 in point 34, where at least one sealing that seals the joint of the channels is fitted between the bottom 20 and the pressure volume part 21.

Second pressure channels 40-49 are arranged for conducting compressible pressure medium from outside the cylinder 9 to the second compressible pressure volume 19 and for creating pressure Pc in the second compressible pressure volume 19. In Fig. 4, the pressure channels 40-49 comprise a group of pressure channels joined to one another, with which pressure Pc is conducted from outside the cylinder 9 via the arm 13 to the second compressible pressure volume 19. The second compressible pressure volume 19 is adapted to be moved with the piston part 11. The piston part 11 allows an adjustment of the pressure Pc in the second compressible pressure volume 19, even during use of the cylinder 9, for example, during use of the calender 100. The pressure channels of both compressible pressure volumes that move with the piston part 11 shown in Fig. 3 may also be realized according to the principle described in advance.

An embodiment applying the principles for pressurizing compressible pressure volumes as shown in Fig. 4 is particularly functionable especially during testing and introduction phases of different applications, because the searching of suitable pressures for each compressible pressure volume 18, 19 is rapid. Then, it is possible to achieve by testing information of most suitable pressure levels for effectively dampening and controlling of vibration. Then, it is also possible to achieve by testing information of most suitable pressure changes usable in different applications, which changes may be made by adjusting the pressures Pc of the compressible pressure volumes 18, 19, for example, during use for effectively dampening and controlling of vibration.

In Fig. 4, a pressure coupling for a pressure pipe (not shown) may be fitted outside the arm 13 in a starting point of the first part 41 of the pressure channel 40-49. The first channel 41 may be formed by a drilling having a direction of a radius of the arm 13, which drilling preferably joins to a second channel 42 that is parallel with a central axis of the arm, which second channel may be a drilling on a central axis of the arm. The second channel 42 joins to a third channel 43, which is inside the arm and preferably opens in the direction of a radius of the arm to a surface of the arm 13 inside a joining region 50 between the piston 12 and the arm 13. In the piston 12, a fourth channel 44 continues at the third channel 43 preferably in a direction of a radius of the piston 12 and joins in the piston 12 with a fifth channel 45 that is preferably parallel with the central axis of the piston. The joining region 50 comprises at least one sealing arranged between the arm 13 and the piston 2, which sealing seals a joint between the channels 43 and 44. The fifth channel 45 joins to a sixth channel 46 having preferably a common direction. The sixth channel further joins to a seventh channel 47 having preferably a common direction. The seventh channel further, located in the piston 12, joins to an eight channel 48 directed inside and preferably has a direction of a radius of the piston. The eight channel joins to a ninth channel 49 leading to the second compressible pressure volume 19. The ninth channel may be a drilling, which is directed perpendicularly to an inner surface of this pressure volume 19. All channels 41-49 may be formed by drillings, all sections of which are not shown in connection with the piston part 13 with the exemplary channels 41-49 shown with dash dotted lines. Particularly such channel sections may appear which are closed and which lead from a surface of a piece to the material, due to reasons appropriately caused by a production technology.

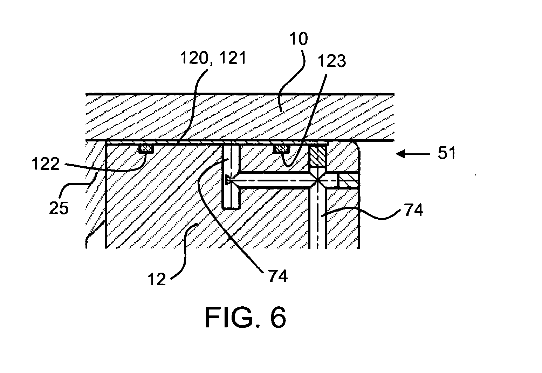

In Fig. 4, the cylinder 9 comprises a sealing structure 51 between the piston 12 and an inner surface of the cylinder part 10. According to some embodiments the sealing structure may be pressurized, for example, in a fashion described particularly in connection with Figs. 5 and 6.

Fig. 5 shows another embodiment of a Fig. 2 type hydraulic cylinder 9. In connection with the cylinder 9 of Fig. 5 reference is made to the description of Fig. 4. The embodiment of Fig. 5 differs from the embodiment shown in Fig. 4 with respect to, i.a., a pressure supply 60-63 arranged for the second compressible pressure volume 19.

A pressure adjustment of the second compressible pressure volume 19, which moves along with the piston 12 takes place according to the principle shown in Fig. 5, via an opening 60 formed in a wall of the cylinder part 10, into which opening a plug (not shown) is fitted pressure tightly during a pressure use of the cylinder 9. In Fig. 5, the cylinder 5 is in an adjustment position of the pressure volume 19. Then, the cylinder 9 is configured preferably to its minimum length and having no pressure. A filling and pressurizing coupling 61, which holds pressure during the use of the cylinder, for the second compressible pressure volume 19 is fitted at the place of the opening 60 in the piston 12, preferably in a second pressure volume part 21' comprised by the piston. The second pressure volume part 21' preferably comprises the same features as the first pressure volume part 21. The pressure supply of the pressure volume 19 additionally comprises a first supply channel 62. The first supply channel 62 continues from the pressure supply coupling 61 in a direction of a radius of the piston 12, for instance. The first supply channel joins to a second supply channel 63, which opens to the second compressible pressure volume 19. The pressure channels of both compressible pressure volumes that move with the piston part 11 shown in Fig. 3, may also be realized according to the principle described in advance.

In Fig. 5, also channels 70-74 for supplying pressure medium are shown via the arm 13 to a sealing structure 51 between the piston 12 and an inner surface of the cylinder part 10. The sealing structure is more particularly shown in Fig. 6. This pressure medium is advantageously the same pressure medium as the hydraulic fluid used in the hydraulic system of the cylinder 9 so that properties of the hydraulic fluid are not changed in a leak situation. A preferably separately adjustable pressure is directed to the sealing structure 51. The channels 70-74 may be formed according to the example by the pressure channels 41-44 shown in Fig. 4 of a group of drillings that are in connection to each other. According to some embodiments the pressure channels 41-44 and the channels 70-74 may be adapted to the common arm 13. The sealing structure 51 may be pressurized for adjusting sealing force in order to reduce sealing friction and leakage between the chambers 16, 17 of the cylinder.

Fig. 6 shows a sealing structure 51 of the piston. The sealing structure comprises a band 121 located in a groove 120 of the piston 12 or a comparable annular sealing adaptable on a surface of the piston and sealing rings 122, 123, mounted under the band. A channel 74 is located between the sealing rings 122, 123 in the piston 12 for supplying pressure under the band 121. The material of the band 121 is selected so that it forms a good gliding pair with the inner surface of the cylinder part 10. The band 121 is, due to the pressure, swelled out and pressed against the wall of the cylinder. Leakage and friction force of the sealing band 121 are optimized by adjusting pressure and the properties of one of leakage and friction force decrease and of the other increase when pressure is changed. The sealing band 121 is located in the groove 120 and that is why the sealing band cannot move in an axial direction of the cylinder 9 with respect to the piston 12 and thus the sealing band cannot transmit a micro motion that is detrimental for sealings. The groove 120 may be closed and the band 121 may be screwable at one side in the axial direction with the support plate 25. Vibration of cylinders has been found as an outcome of a use of years to wear out sealings and grooves at the location of the sealings.

The foregoing description provides non-limiting examples of some embodiments of the invention. It is clear to a person skilled in the art that the invention is not restricted to details presented, but that the invention can be implemented in other equivalent means.

Some of the features of the above-disclosed embodiments may be used to advantage without the use of other features. As such, the foregoing description shall be considered merely illustrative of the principles of the invention, and not in limitation thereof. Hence, the scope of the invention is solely restricted by the appended patent claims.

## Claims

1. A hydraulic actuator (9) comprising a cylinder part (10) and a piston part (11) adapted to be moved within the cylinder part, the piston part comprising a piston (12) and an arm (13) attached to the piston, and the hydraulic actuator (9) comprising at a first side of the piston (12) a first pressure volume (16) to be pressurized with hydraulic pressure medium for a first motion direction and at a second side of the piston (12) a second pressure volume (17) to be pressurized with hydraulic pressure medium for a second motion direction, **characterized in that** in the hydraulic actuator (9), a compressible pressure volume (18, 19) is pressure connected (22, 22', 28, 23) to at least one of said pressure volumes (16, 17).

2. A hydraulic actuator according to claim 1, **characterized in that** the rigidity of the hydraulic actuator (9) is changeable by adjusting the pressure of the compressible pressure volume (18, 19).

3. A hydraulic actuator according to claim 1 or 2, **characterized in that** compressible pressure medium is arranged within the compressible pressure volume (18, 19).

4. A hydraulic actuator according to any of claims 1 to 3, **characterized in that** when pressure (Pw) in each pressure volume (16, 17) exceeds pressure (Pc) arranged to the compressible pressure volume (18, 19) in pressure connection with that pressure volume (16, 17), this compressible pressure volume (18, 19) contracts.

5. A hydraulic actuator according to any of claims 1 to 4, **characterized in that** a first compressible pressure volume (18) is arranged to a first pressure connection (22, 28) with the first pressure volume (16) and a second compressible pressure volume (19) is adapted to a second pressure connection (23, 22', 28) with the second pressure volume (17).

6. A hydraulic actuator according to any of claims 1 to 4, **characterized in that** the compressible pressure medium adapted within the compressible pressure volume (18, 19) comprises medium having a compressibility higher than the compressibility of the hydraulic pressure medium used in the chambers (16, 17).

7. The hydraulic actuator according to any of claims 1 to 6, **characterized in that** the compressible pressure medium comprises a gas mixture such as nitrogen or a nitrogen mixture.

8. A hydraulic actuator according to any of claims 1 to 7, **characterized in that** at least one compressible pressure volume (18, 19) is arranged to the piston part (11).

9. A hydraulic actuator according to any of claims 1 to 8, **characterized in that** the first compressible pressure volume (18) is arranged to the first pressure volume (16) and the second compressible pressure volume (19) is arranged to the piston part (11), or the first compressible pressure volume (18) and the second compressible pressure volume (19) are arranged to the piston part (11).

10. A hydraulic actuator according to any of claims 1 to 9, **characterized in that** between the compressible pressure volume (18, 19) and the pressure volume (16, 17) in pressure connection with it there is fitted a movable separation structure (24), such as a membrane or a piston, which borders with the compressible pressure volume (18, 19), which movable separation structure comprises a limited motion length in the direction of the pressure volume (16, 17).

11. A hydraulic actuator according to claim 10, **characterized in that** a support sheet (25) is fitted between the movable separation structure (24) and the respective compressible pressure volume (18, 19), the support sheet comprising pressure channels (22, 22') such as holes.

12. A hydraulic actuator according to claim 11, **characterized in that** a mesh (26) is fitted between the movable separation structure (24) and the support sheet (25).

13. An apparatus comprising a machine element (1, 2, 3, 4) and a hydraulic actuator (9) according to claim 1 supporting the machine element.

14. An apparatus according to claim 13, **characterized in that** the apparatus comprises a nip apparatus such as a calender (100) comprising a roll (1, 2, 3) supported by the hydraulic actuator (9).

15. A method for dampening vibration of a machine element (1, 2, 3, 4), the method comprising supporting the machine element (1, 2, 3, 5) with a hydraulic actuator (9) comprising a cylinder part (10) and a piston part (11) adapted to be moved within the cylinder part, the piston part comprising a piston (12) and an arm (13) attached to the piston, and the cylinder (9) comprising at a first side of the piston (12) a first pressure volume (16) to be pressurized with hydraulic pressure medium for a first motion direction and at a second side of the piston (12) a second pressure volume (17) to be pressurized with hydraulic pressure medium for a second motion direction, **characterized by** arranging in the hydraulic actuator (9) a compressible pressure volume (18, 19) pressure connected (22, 22', 28, 23) to at least one of said pressure volumes (16, 17).

## Patentansprüche

1. Hydraulischer Aktuator (9) mit einem Zylinderteil (10) und einem Kolbenteil (11), das dafür vorgesehen ist, innerhalb des Zylinderteils bewegt zu werden, wobei das Kolbenteil einen Kolben (12) und einen an dem Kolben angebrachten Arm (13) aufweist, und wobei der hydraulische Aktuator (9) an einer ersten Seite des Kolbens (12) ein erstes Druckvolumen (16), das mit einem hydraulischen Druckmedium für eine erste Bewegungsrichtung beaufschlagbar ist, und an einer zweiten Seite des Kolbens (12) ein zweites Druckvolumen (17) aufweist, das mit einem hydraulischen Druckmedium für eine zweite Bewegungsrichtung beaufschlagbar ist,
**dadurch gekennzeichnet, dass**
in dem hydraulischen Aktuator (9) ein kompressibles Druckvolumen (18, 19) in Druckverbindung (22, 22', 28, 23) mit wenigstens einem der Druckvolumina (16,17) ist.

2. Hydraulischer Aktuator nach Anspruch 1,
**dadurch gekennzeichnet, dass**
die Steifigkeit des hydraulischen Aktuators (9) durch Einstellen des Drucks des kompressiblen Druckvolumens (18, 19) veränderbar ist.

3. Hydraulischer Aktuator nach Anspruch 1 oder 2,
**dadurch gekennzeichnet, dass**
ein kompressibles Druckmedium innerhalb des kompressiblen Druckvolumens (18, 19) angeordnet ist.

4. Hydraulischer Aktuator nach einem der Ansprüche 1 bis 3,
**dadurch gekennzeichnet, dass**
wenn ein Druck (Pw) in jedem Druckvolumen (16, 17) einen Druck (Pc) überschreitet, der auf das kompressible Druckvolumen (18, 19) das in Druckverbindung mit dem Druckvolumen (16, 17) steht, sich das kompressible Druckvolumen (18, 19) zusammenzieht.

5. Hydraulischer Aktuator nach einem der Ansprüche 1 bis 4,
**dadurch gekennzeichnet, dass**
ein erstes kompressibles Druckvolumen (18) mit einer ersten Druckverbindung (22, 28) mit dem ersten Druckvolumen (16) und ein zweites kompressibles Druckvolumen (19) mit einer zweiten Druckverbindung (23, 22', 28) mit dem zweiten Druckvolumen (17) angeordnet ist.

6. Hydraulischer Aktuator nach einem der Ansprüche 1 bis 4,
**dadurch gekennzeichnet, dass**
das in dem kompressiblen Druckvolumen (18, 19) vorgesehene kompressible Druckmedium eine höhere Kompressibilität als die Kompressibilität des in den Kammern (16, 17) verwendeten hydraulischen Druckmediums aufweist.

7. Hydraulischer Aktuator nach einem der Ansprüche 1 bis 6,
**dadurch gekennzeichnet, dass**
das kompressible Druckmedium eine Gasmischung, wie zum Beispiel Stickstoff oder eine Stickstoffmischung, aufweist.

8. Hydraulischer Aktuator nach einem der Ansprüche 1 bis 7,
**dadurch gekennzeichnet, dass**
wenigstens ein kompressibles Druckvolumen (18, 19) dem Kolbenteil (11) zugeordnet ist.

9. Hydraulischer Aktuator nach einem der Ansprüche 1 bis 8,
**dadurch gekennzeichnet, dass**
das erste kompressible Druckvolumen (18) dem ersten Druckvolumen (16) zugeordnet ist und das zweite kompressible Druckvolumen (19) dem Kolbenteil (11) zugeordnet ist, oder das erste kompressible Druckvolumen (18) und das zweite kompressible Druckvolumen (19) dem Kolbenteil (11) zugeordnet sind.

10. Hydraulischer Aktuator nach einem der Ansprüche 1 bis 9,
**dadurch gekennzeichnet, dass**
zwischen dem kompressiblen Druckvolumen (18, 19) und dem mit demselben in Verbindung stehenden Druckvolumen (16, 17) eine bewegliche Trennstruktur (24), wie zum Beispiel eine Membran oder ein Kolben, angeordnet ist, die an das kompressible Druckvolumen (18, 19) angrenzt, wobei die bewegliche Trennstruktur eine eingeschränkte Bewegungslänge in der Richtung des Druckvolumens (16, 17) aufweist.

11. Hydraulischer Aktuator nach Anspruch 10,
**dadurch gekennzeichnet, dass**
eine Stützplatte (25) zwischen der beweglichen Trennstruktur (24) und dem entsprechenden kompressiblen Druckvolumen (18,19) angeordnet ist, wobei die Stützplatte Druckkanäle (22, 22'), wie zum Beispiel Bohrungen, aufweist.

12. Hydraulischer Aktuator nach Anspruch 11,
**dadurch gekennzeichnet, dass**
ein Gewebe bzw. Netz (26) zwischen der beweglichen Trennstruktur (24) und der Stützplatte (25) angebracht ist.

13. Vorrichtung mit einem Maschinenelement (1, 2, 3, 4) und einem hydraulischen Aktuator (9) gemäß Anspruch 1, welcher das Maschinenelement stützt zum Dämpfen von Vibrationen des Maschinenelements (1, 2, 3 ,4).

14. Vorrichtung nach Anspruch 13,
**dadurch gekennzeichnet, dass**
die Vorrichtung eine Walzenspaltvorrichtung, wie zum Beispiel einen Kalander (100) aufweist, der eine von dem hydraulischen Aktuator (9) gestützte Walze (1, 2, 3) aufweist.

15. Verfahren zum Dämpfen von Vibrationen eines Maschinenelements (1, 2, 3, 4), wobei das Verfahren das Stützen des Maschinenelements (1, 2, 3, 5) mit einem hydraulischen Aktuator (9) aufweist, der ein Zylinderteil (10) und ein Kolbenteil (11) aufweist, das dafür vorgesehen ist, innerhalb des Zylinderteils bewegt zu werden, wobei das Kolbenteil einen Kolben (12) und einen an dem Kolben angebrachten Arm (13) aufweist, und wobei der Zylinder (9) an einer ersten Seite des Kolbens (12) ein erstes Druckvolumen (16), das mit einem hydraulischen Druckmedium für eine erste Bewegungsrichtung beaufschlagbar ist, und an einer zweiten Seite des Kolbens (12) ein zweites Druckvolumen (17) aufweist, das mit einem hydraulischen Druckmedium für eine zweite Bewegungsrichtung beaufschlagbar ist,
**gekennzeichnet durch**
das Anordnen eines kompressiblen Druckvolumens (18, 19) in dem hydraulischen Aktuator (9), das in Druckverbindung (22, 22', 28, 23) mit wenigstens einem der Druckvolumina (16, 17) ist.

## Revendications

1. Actionneur hydraulique (9) comprenant une partie de cylindre (10) et une partie de piston (11) apte à être déplacée à l'intérieur de la partie de cylindre, la partie de piston comprenant un piston (12) et un bras (13) attaché au piston, et l'actionneur hydraulique (9) comprenant à un premier côté du piston (12) un premier volume de pression (16) à pressuriser avec un milieu de pression hydraulique pour une première direction de déplacement et à un deuxième côté du piston (12) un deuxième volume de pression (17) à pressuriser avec un milieu de pression hydraulique pour une deuxième direction de déplacement, **caractérisé en ce que**, dans l'actionneur hydraulique (9), un volume de pression compressible (18, 19) est relié par pression (22, 22', 28, 23) à au moins l'un desdits volumes de pression (16, 17).

2. Actionneur hydraulique selon la revendication 1, **caractérisé en ce que** la rigidité de l'actionneur hydraulique (9) est modifiable en ajustant la pression du volume de pression compressible (18, 19).

3. Actionneur hydraulique selon la revendication 1 ou 2, **caractérisé en ce que** le milieu de pression compressible est agencé à l'intérieur du volume de pression compressible (18, 19).

4. Actionneur hydraulique selon l'une quelconque des revendications 1 à 3, **caractérisé en ce que**, lorsque la pression (Pw) dans chaque volume de pression (16, 17) dépasse une pression (Pc) agencée dans le volume de pression compressible (18, 19) en liaison de pression avec ce volume de pression (16, 17), ce volume de pression compressible (18, 19) se contracte.

5. Actionneur hydraulique selon l'une quelconque des revendications 1 à 4, **caractérisé en ce qu'**un premier volume de pression compressible (18) est agencé sur une première liaison de pression (22, 28) avec le premier volume de pression (16) et un deuxième volume de pression compressible (19) est adapté à une deuxième liaison de pression (23, 22', 28) avec le deuxième volume de pression (17).

6. Actionneur hydraulique selon l'une quelconque des revendications 1 à 4, **caractérisé en ce que** le milieu de pression compressible adapté à l'intérieur du volume de pression compressible (18, 19) comprend un milieu ayant une compressibilité supérieure à la compressibilité du milieu de pression hydraulique utilisé dans les chambres (16, 17).

7. Actionneur hydraulique selon l'une quelconque des revendications 1 à 6, **caractérisé en ce que** le milieu de pression compressible comprend un mélange de gaz comme de l'azote ou un mélange contenant de l'azote.

8. Actionneur hydraulique selon l'une quelconque des revendications 1 à 7, **caractérisé en ce qu'**au moins un volume de pression compressible (18, 19) est agencé sur la partie de piston (11).

9. Actionneur hydraulique selon l'une quelconque des revendications 1 à 8, **caractérisé en ce que** le premier volume de pression compressible (18) est agencé sur le premier volume de pression (16) et le deuxième volume de pression compressible (19) est agencé sur la partie de piston (11), ou le premier volume de pression compressible (18) et le deuxième volume de pression compressible (19) sont agencés sur la partie de piston (11).

10. Actionneur hydraulique selon l'une quelconque des revendications 1 à 9, **caractérisé en ce que**, entre le volume de pression compressible (18, 19) et le volume de pression (16, 17) en liaison de pression avec celui-ci, il est monté une structure de séparation mobile (24), comme une membrane ou un piston, à la frontière avec le volume de pression compressible (18, 19), ladite structure de séparation mobile comprenant une longueur de déplacement limitée dans la direction du volume de pression (16, 17).

11. Actionneur hydraulique selon la revendication 10, **caractérisé en ce qu'**une feuille de support (25) est montée entre la structure de séparation mobile (24) et le volume de pression compressible respectif (18, 19), la feuille de support comprenant des canaux de pression (22, 22') comme des trous.

12. Actionneur hydraulique selon la revendication 11, **caractérisé en ce qu'**un engrènement (26) est monté entre la structure de séparation mobile (24) et la feuille de support (25).

13. Appareil comprenant un élément de machine (1, 2, 3, 4) et un actionneur hydraulique (9) selon la revendication 1 supportant l'élément de machine pour amortir la vibration de l'élément de machine (1, 2, 3, 4).

14. Appareil selon la revendication 13, **caractérisé en ce que** l'appareil comprend un appareil de pincement comme une calandre (100) comprenant un rouleau (1, 2, 3) supporté par l'actionneur hydraulique (9).

15. Procédé d'amortissement de vibration d'un élément de machine (1, 2, 3, 4), le procédé comprenant le soutien de l'élément de machine (1, 2, 3, 5) avec un actionneur hydraulique (9) comprenant une partie de cylindre (10) et une partie de piston (11) apte à être déplacée à l'intérieur de la partie de cylindre, la partie de piston comprenant un piston (12) et un bras (13) attaché au piston, et le cylindre (9) comprenant à un premier côté du piston (12) un premier volume de pression (16) à pressuriser avec un milieu de pression hydraulique pour une première direction de déplacement et à un deuxième côté du piston (12) un deuxième volume de pression (17) à pressuriser avec un milieu de pression hydraulique pour une deuxième direction de déplacement, **caractérisé par** l'agencement, dans l'actionneur hydraulique (9), d'un volume de pression compressible (18, 19) relié par pression (22, 22', 28, 23) à au moins l'un desdits volumes de pression (16, 17).
